# FASCICULE DE BREVET EUROPEEN

(11) **EP 0 462 877 B1**
(45) Date de publication et mention de la délivrance du brevet: **31.08.1994**
(21) Numéro de dépôt: 91401594.6
(22) Date de dépôt: 14.06.1991
(51) Int. Cl.: G09B 9/08, G09F 9/30

(54) **Dispositif de formation d'images sur une grande surface, et simulateur pourvu d'un tel dispositif**
Bilderzeugungsgerät für eine grosse Fläche sowie Simulator versehen mit einer solchen Vorrichtung
Image forming apparatus on a large surface and simulator provided with such a device

(30) Priorité: 19.06.1990 FR 9007640
(43) Date de publication de la demande: 27.12.1991
(73) Titulaire: THOMSON-CSF, 75008 Paris (FR)
(72) Inventeur: Couturier, Alain, F-92045 Paris la Défense (FR)
(74) Mandataire: Chaverneff, Vladimir

(56) Documents cités:
- EP-A- 0 121 415
- EP-A- 0 275 061
- EP-A- 0 324 147
- WO-A-88/00715
- US-A- 4 732 456
- JOURNAL OF ELECTRONIC ENGINEERING vol. 18, no. 180, déc. 1981, pages 23-26, Tokyo, JP; K. SHIMAZAKI et al.: "Sophisticated Visual Display now possible with Flight Simulator"

## Description

Les simulateurs actuels, en particulier les simulateurs d'aéronefs, comportent une sphère, sur laquelle sont projetées des images synthétisées et/ou pré-enregistrées, et à peu près au centre de laquelle est disposée une cabine dans laquelle prennent place les utilisateurs, l'ensemble étant généralement mobile selon plusieurs degrés de liberté. Les images sont projetées par plusieurs dispositifs de projection. Ces dispositifs de projection sont, la plupart du temps, de deux sortes : ceux relatifs au paysage (ciel et terre), et ceux visualisant d'autres aéronefs, qui doivent avoir une meilleure résolution que les premiers.

Ces dispositifs de projection sont souvent encombrants et lorsqu'ils sont mobiles, peuvent se gêner mutuellement et ont une inertie élevée qui les empêche de réagir rapidement et fidèlement par exemple à des mouvements rapides de la tête de l'utilisateur. Les dispositifs de projection grand angle (tels que des "fish eye") présentent des déformations géométriques importantes et des aberrations optiques. En outre, la surface de projection de la sphère, qui est blanche, se présente par nature comme une sphère intégrante, c'est-à-dire que lorsqu'elle est partiellement éclairée par un projecteur, même sur une faible partie de sa surface, aucun point de sa surface non éclairée par ce projecteur ne peut être noir, ce qui diminue nettement le contraste et donc la perception de la résolution des images projetées.

La présente invention a pour objet un simulateur qui permette de visualiser des images sur une surface sphérique en présentant le minimum possible d'occupation à l'intérieur du volume renfermé par cette surface, le minimum possible de distorsions géométriques et d'aberrations et des temps de réponse les plus courts possibles, et le meilleur contraste possible, tout en n'étant pas plus onéreux que les dispositifs actuels comparable.

La sphère du simulateur conforme à l'invention comporte un "écran actif" dont la surface de visualisation est formée au moins en partie de cellules juxtaposées constituant chacune la surface de formation d'image d'un dispositif de production d'images, les cellules étant excitées individuellement, celles non excitées étant sombres, ces cellules comportant des feuilles de cristaux liquides encapsulés. De façon avantageuse, l'adressage des différents éléments d'image (pixels) des cellules est purement électronique.

Selon un mode de réalisation avantageux, chaque cellule est constituée par des cristaux liquides encapsulés.

Selon un autre mode de réalisation, chaque cellule constitue la terminaison d'une fibre optique reliée à son autre extrémité à un dispositif de production d'élément d'image.

Selon encore un autre mode de réalisation, le dispositif de production d'images est asservi aux mouvements de la tête de l'utilisateur, et commande électroniquement l'augmentation de la résolution dans la direction du regard de l'utilisateur.

La présente invention sera mieux comprise à la lecture de la description de plusieurs modes de réalisation, pris à titre d'exemples non limitatifs, et illustrés par le dessin annexé, sur lequel :
- la figure 1 est une vue extérieure d'un simulateur à sphère de visualisation conforme à l'invention, avec arraché montrant une partie de l'intérieur de la sphère,
- la figure 2 est une représentation schématique des composants principaux de la sphère active,
- les figures 3 et 4 sont des vues schématiques de configurations de cellules de dômes conformes à l'invention,
- la figure 5 est un schéma illustrant deux technologies différentes de cellules actives, et
- les figures 6 à 8 sont des schémas simplifiés de détails de construction de deux modes de réalisation de cellules conformes à l'invention.

L'invention est décrite ci-dessous en référence à un simulateur à dôme sphérique de visualisation d'images, en particulier un simulateur d'aéronef, mais il est bien entendu qu'elle peut être mise en oeuvre pour d'autres types de simulateurs (simulateurs de navires, de postes de commande d'usines, etc...), et dans les simulateurs dont les surfaces de visualisation ou écrans actifs ne sont pas sphériques (par exemple à un seul panneau paln ou à plusieurs panneaux plans formant des polyèdres...).

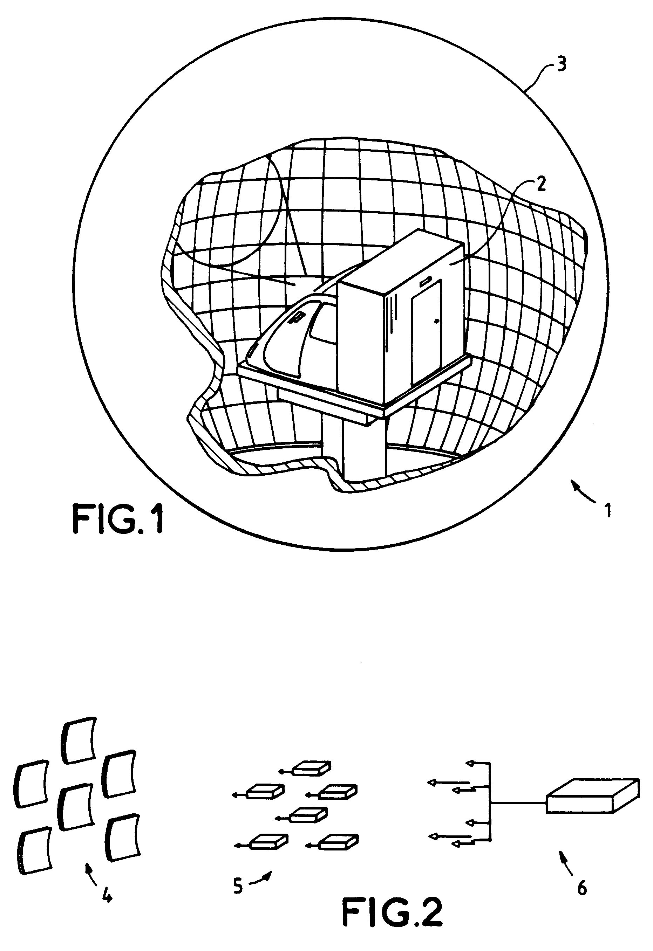

Le simulateur 1 représenté en figure 1 comporte essentiellement une cabine de pilotage 2 disposée à peu près au centre d'un dôme 3 sensiblement sphérique. La cabine 2 reproduit de la façon la plus réaliste possible une véritable cabine de pilotage d'aéronef. La surface de visualisation du dôme 3 est formée d'un grand nombre (plusieurs centaines à plusieurs milliers) de cellules de visualisation Vi. Ces cellules Vi ont de préférence une forme géométrique simple : triangulaire, rectangulaire... Les dimensions et le nombre de ces cellules sont fonction de la résolution que l'on veut obtenir. Ces cellules peuvent être toutes de mêmes dimensions, on bien celles situées dans le champ visuel normal de l'utilisateur (celui qu'il voit en bougeant très peu la tête) peuvent être plus petites, alors que les autres, qu'il est susceptible de voir plus rarement, peuvent être plus grandes. Les dimensions de ces cellules sont variables en fonction de la technologie utilisée pour les réaliser, et le nombre de pixels qu'elles comportent chacune dépend en particulier de la résolution désirée. Une cellule est un ensemble fonctionnel d'un grand nombre de pixels (plusieurs centaines à plusieurs milliers par exemple) formant un bloc facilement adressable. La taille de ce bloc est donc aussi fonction des moyens d'adressage dont on dispose et de la façon dont on produit l'usage visualisée. Dans le cas décrits ci-dessous d'utilisation de feuilles de cristaux liquides encapsulés, ou de micro-moniteurs à cristaux liquides qui sont généralement à configuration matricielle, on utilise de préférence des modules à cristaux liquides existants, ainsi que des circuits logiques de commande existants appropriés à ces modules. Bien entendu, si l'on utilise des modules à grande résolution et que l'on n'a pas besoin pour le dôme 3 d'une telle résolution, on peut n'adresser qu'une partie des pixels (une colonne et/ou une ligne sur plusieurs) ou relier ensemble à chaque fois plusieurs colonnes et/ou lignes voisines, ce qui rend les moyens de calcul du dispositif de synthèse d'images (non représenté) commandant ces cellules moins onéreux.

On a représenté en figure 2 les éléments essentiels du dispositif de formation d'images à cellules actives de l'invention. Ces éléments sont : les cellules actives 4, dont des modes de réalisation sont décrits ci-dessous, des dispositifs 5 de commande de cellules individuelles, et des répartiteurs ou pré-distributeurs vidéo 6. Les dispositifs 5 dont le nombre est, en principe égal à celui des cellules individuelles, sont des contrôleurs de cellules à circuits logiques ou à processeurs associés à une micro-mémoire d'image, qui jouent le rôle d'interfaces entre le dispositif de formation d'images (projecteur ou extrémité de fibre optique reliée à un projecteur) et les cellules individuelles. Ces dispositifs 5, dont la technologie et la complexité dépendent de celles des cellules individuelles, peuvent faire partie intégrante d'un ensemble de commande de zone d'image disposé sur le dôme 3, ou éloigné de celui-ci, chaque zone d'image ayant son propre ensemble de commande. Une zone d'image est généralement une portion de la surface totale sphérique de l'image formée à l'intérieur du dôme 3 et délimitée par des méridiens et/ou des parallèles.

Les pré-distributeurs 6, qui sont par exemple au nombre de 1 à 10 sont branchés chacun en sortie à plusieurs contrôleurs 5. Ils peuvent être électroniques et/ou optiques.

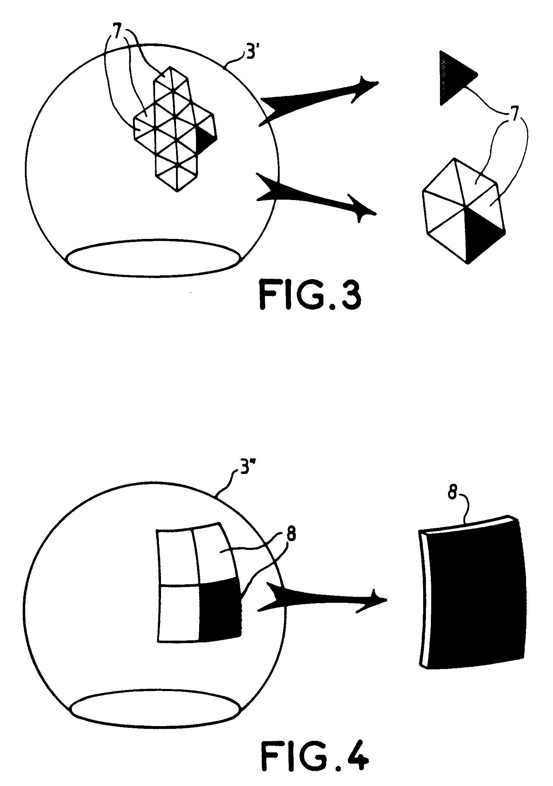

On a représenté en figures 3 et 4 deux modes de réalisation du dôme 3, à savoir les dômes 3′ (figure 3) et 3˝ (figure 4). Le dôme 3′ est pseudo-sphérique, et est constitué de cellules actives à panneaux plans triangulaires 7 assemblés par six pour former des motifs à contour hexagonal. Le dôme 3˝ est pratiquement sphérique, et formé de cellules actives souples ou conformables 8 ayant un contour sensiblement rectangulaire. Il est bien entendu que ces deux modes de réalisation ne sont que deux exemples parmi un grand nombre de modes de réalisation possibles dans le cadre de l'invention.

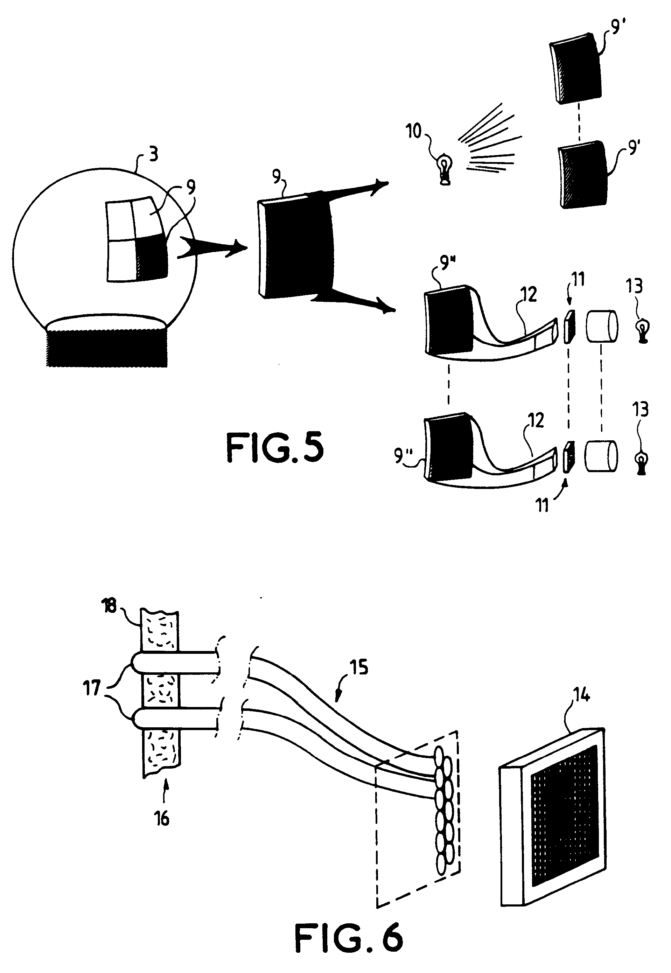

Le schéma simplifié de la figure 5 montre deux possibilités de réalisation du dôme 3 de l'invention utilisant des cristaux liquides en tant que cellules actives 9. Si les cellules (9′) sont formées de cristaux liquides passifs fonctionnant en réflexion, l'éclairage 10 est situé à l'intérieur du dôme, et peut avantageusement être asservi à l'axe d'observation de l'utilisateur. Cet éclairage est commun à un grand nombre de cellules, et on peut n'en utiliser qu'un faible nombre pour tout le simulateur, ( généralement de un à cinq). Si les cellules (9˝) sont associées à des cristaux liquides actifs, ces derniers font partie de projecteurs ou de micro-moniteurs 11 reliés par des faisceaux de fibres optiques 12, qui peuvent avantageusement être en matière plastique et donc peu onéreuses. L'éclairage 13 est individuel pour chaque cellule et est disposé à l'extérieur du dôme 3. En général, ces cellules 9˝ sont plus petites que les cellules 9′.

L'intérêt du mode de réalisation à cristaux liquides encapsulés réside en particulier dans l'homogénéité des propriétés optiques des cellules. En effet, l'énergie d'éclairage n'est pas créée par les cellules, mais dépend seulement de la source globale ( 10).

On a représenté en figure 6 le schéma de principe du dispositif de formation d'images dans le cas de l'utilisation de cristaux liquides actifs. L'image est produite sur un écran, ou un micromoniteur ou un projecteur (14) à cristaux liquides et est guidée par un faisceau 15 de fibres optiques en matière plastique faisant office d'anamorphoseur pour former l'image sur la surface de la cellule 16 qui peut être plane ou sphérique par exemple. De façon avantageuse, le faisceau 15 est dense du côté du projecteur 14, et s'épanouit du côté le la cellule 16. Les extrémités des fibres optiques, côté cellule 16, sont conformées sensiblement en micro-lentilles 17 de façon à obtenir un compromis entre directivité et diffusion, compromis qui est fonction de leur pas au niveau de la cellule 16 et fixées dans des ouvertures appropriées d'un substrat 18 autoporteur, qui peut être fabriqué en matériau composite noir.

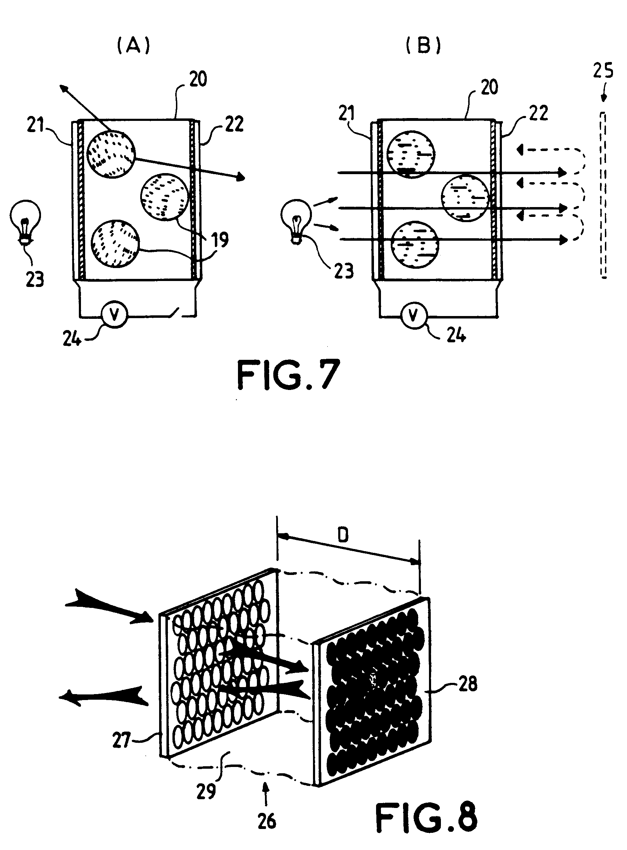

On a représenté en figure 7 le principe de réalisation de cellules à cristaux liquides passifs encapsulés souples. De tels cristaux liquides sont connus en soi (voir par exemple JAPAN DISPLAY'89, pages 572-579, l'article de Z. YANIR et al), et ne seront décrits ici que succinctement. Des gouttes 19 de cristal liquide en émulsion avec un colorant opaque sont encapsulées dans une feuille 20 en matériau polymère. Les molécules de colorant forment des espèces de bâtonnets à l'intérieur des gouttes 19. Sur les deux faces de cette feuille, on forme des électrodes 21, 22 en matériau transparent à la longueur d'onde de la source lumineuse 23 utilisée. Les électrodes 21,22 sont reliées à une source de tension 24. En l'absence de champ appliqué aux électrodes 21, 22 (en A), la feuille 20 est pratiquement opaque, car les bâtonnets des gouttes de cristal liquide sont orientés dans pratiquement toutes les directions. En présence d'un champ électrique fourni par la source 24, (en B), les bâtonnets de colorant s'orientent dans le sens du champ électrique c'est-à-dire perpendiculairement aux faces de la feuille, laissant ainsi passer la lumière incidente, et la feuille 20 devient transparente (ou globalement réfléctrice si on lui adjoint un réflecteur 25 à revêtement de phosphores ou de peinture).

La feuille 20 se présente sous forme de pâte plastique solide qui peut être appliquée comme une peinture sur un support approprié (par exemple un support sphérique) et qui a les propriétés optiques des cristaux liquides. Un autre avantage de ce matériau est que les micro-billes 19 ont un temps de réponse beaucoup plus court (environ 10 fois) que celui de l'équivalent liquide classique.

On a représenté en figure 8 une vue éclatée d'une cellule à cristaux liquides encapsulés mais il est bien entendu que cette technologie n'est pas la seule envisageable dans le cadre de l'invention pour réaliser les cellules à cristaux liquides passifs. Cette cellule 26 se compose essentiellement de deux feuilles en matière plastique souple 27,28 disposées en vis-à-vis à une distance D d'environ 100 microns, l'espace 29 entre ces deux feuilles étant rempli d'une émulsion de cristaux liquides et de colorant opaque encapsulée dans un matériau polymère, ces deux feuilles étant ensuite soudées entre elles sur leurs bords. Les faces extérieures des feuilles 27,28 sont recouvertes d'une couche de matériau électriquement conducteur et transparent à la longueur d'onde utilisée. On peint ensuite sur la face extérieure de l'une des feuilles un réseau de points réfléchissants rouges, verts et bleus d'un diamètre d'environ 1 à 2 mm, qui peuvent être jointifs.

## Revendications

1. Simulateur à sphère de présentation d'images, au centre de laquelle est disposée une cabine dans laquelle prennent place les utilisateurs, caractérisé par le fait que la sphère comporte un "écran actif" (3) dont la surface de visualisation est formée au moins en partie de cellules juxtaposées (Vi) constituant chacune la surface de formation d'image d'un dispositif de production d'image (9′,10 ou 9˝,11,13,12), les cellules étant excitées individuellement, celles non excitées étant sombres, ces cellules comportant des feuilles de cristaux liquides encapsulés (26).

2. Simulateur selon la revendication 1, caractérisé par le fait que les éléments d'image (pixels) de chaque cellule sont adressés électroniquement.

3. Simulateur selon la revendication 1 ou 2, caractérisé par le fait que les cellules fonctionnent en transmission.

4. Simulateur selon la revendication 1 ou 2, caractérisé par le fait que les cellules fonctionnent en réflexion et sont associées à un réflecteur (25).

5. Simulateur selon l'une des revendications précédentes, caractérisé par le fait que l'on peint sur les cellules des points colorés (figure 8).

## Patentansprüche

1. Simulator mit Kugel zur Bilddarstellung, in deren Mitte eine Kabine angeordnet ist, in der die Benutzer Platz nehmen, gekennzeichnet durch die Tatsache, daß die Kugel einen "aktiven Bildschirm" (3) enthält, dessen Anzeigefläche wenigstens teilweise durch nebeneinanderliegende Zellen (Vi) ausgebildet ist, die jeweils die Bilderstellungsfläche einer Bilderzeugungsvorrichtung (9′, 10 oder 9˝, 11, 13, 12) bilden, wobei die Zellen einzeln erregt werden, wobei nicht erregte Zellen dunkel sind und wobei die Zellen Plättchen (26) mit eingekapselten Flüssigkristallen enthalten.

2. Simulator nach Anspruch 1, gekennzeichnet durch die Tatsache, daß die Bildelemente (Pixel) jeder Zelle elektronisch adressiert werden.

3. Simulator nach Anspruch 1 oder 2, gekennzeichnet durch die Tatsache, daß die Zellen mit Durchlicht arbeiten.

4. Simulator nach Anspruch 1 oder 2, gekennzeichnet durch die Tatsache, daß die Zellen mit Reflexion arbeiten und einem Reflektor (25) zugeordnet sind.

5. Simulator nach einem der vorhergehenden Ansprüche, gekennzeichnet durch die Tatsache, daß man auf die Zellen Farbpunkte aufmalt (Fig. 8).

## Claims

1. Simulator with image presentation sphere, at the centre of which is arranged a cockpit in which the users sit, characterized in that the sphere includes an "active screen" (3) whose display surface is formed at least in part by juxtaposed cells (Vi) each constituting the image formation surface of an image production device (9′, 10 or 9˝, 11, 13, 12), the cells being excited individually, the unexcited ones being dark, these cells including sheets of encapsulated liquid crystals (26).

2. Simulator according to Claim 1, characterized in that the image elements (pixels) of each cell are addressed electronically.

3. Simulator according to Claim 1 or 2, characterized in that the cells operate by transmission.

4. Simulator according to Claim 1 or 2, characterized in that the cells operate by reflection and are associated with a reflector (25).

5. Simulator according to one of the preceding claims, characterized in that coloured dots (Figure 8) are painted on the cells.
